# EUROPÄISCHE PATENTSCHRIFT

(11) **EP 2 851 677 B1**
(45) Veröffentlichungstag und Bekanntmachung des Hinweises auf die Patenterteilung: **05.02.2020**
(21) Anmeldenummer: 13004613.9
(22) Anmeldetag: 23.09.2013
(51) Int. Cl.: G01N 21/90, G01N 21/952

(54) **Mehrzeilen-Scantechnik**
Multi-line scanning method
Technique de balayage multilignes

(43) Veröffentlichungstag der Anmeldung: 25.03.2015
(73) Patentinhaber: Gerresheimer Bünde GmbH, 32257 Bünde (DE)
(72) Erfinder: Acker, Wolfram, 32257 Bünde (DE); Hellmich, Matthias, 32257 Bünde (DE)
(74) Vertreter: Philipp, Matthias

(56) Entgegenhaltungen:
- EP-A1- 0 683 388
- EP-A1- 1 916 515
- EP-A2- 2 251 268
- WO-A1-2012/110749
- WO-A2-2012/046146
- DE-C1- 10 017 126
- FR-A1- 2 907 554
- JP-A- 2003 322 516
- JP-A- 2006 214 890
- US-A1- 2012 293 789

## Beschreibung

Die vorliegende Erfindung betrifft ein Verfahren zur optischen Überprüfung eines Messobjekts.

Aus DE 41 28 856 A1 ist ein Verfahren zur Prüfung von Reagenzröhrchen bekannt. Dabei wird ein Reagenzröhrchen um seine Längsachse gedreht und mittels eines CCD-Sensorarrays abgetastet. Signale des CCD-Sensorarrays werden anhand ihrer Lage im Array gewichtet. Das offenbarte Verfahren bietet nur einen eingeschränkten Messerfolg, da Lagepunkte der Reagenzröhrchenoberfläche in unterschiedlicher Entfernung und unter unterschiedlichem Winkel erscheinen, und da die Gewichtung von Signalen, die den Lagepunkten entsprechen, die aus Entfernungen und Winkeln resultierende Ungenauigkeit nur näherungsweise ausgleichen.

In DE 197 57 067 C2 ist ein Verfahren zur Messung des Durchmessers eines Strangs offenbart. Hierzu wird ein Bild eines Strangs in Zentralperspektive erzeugt und anhand von Intensitätsverläufen des Bildes der Durchmesser des Strangs ermittelt. Das Verfahren ist insofern von Nachteil, als dass die Zentralperspektive aufgrund unterschiedlicher Tiefen und Winkel der aufgenommenen Daten zu Messungenauigkeiten führt.

DE 199 53 415 C1 offenbart ein Verfahren zum Detektieren von Oberflächenfehlern eines Messobjekts, das auf einem Förderband unter einer Kamera hindurch geführt wird. Die Kamera nimmt thermografische Daten auf. Unterschiedliche Bildzeilen entsprechen unterschiedlichen Entfernungen der Messobjektoberfläche von der Kamera. Der Ansatz lässt jedoch Fragen zur angemessenen Verwertung der Daten offen.

In WO 2012/046146 A2 ist ein Mechanismus zum Aufnehmen von Bildern eines rotierenden Objekts offenbart. Die Bilder werden durch einen Matrizensensor mit Hilfe einer Maske erzeugt, und aufeinanderfolgende Frames, die von der Oberfläche des Objekts aufgenommen werden, anschließend zusammengesetzt.

Aus DE 100 17 127 C2 geht Drehen und Ablichten eines flaschenförmigen Körpers hervor. Aus den aufgenommenen Teilbildern wird anschließend ein Bild zusammengesetzt, das mit einer Referenzabbildung des Körpers verglichen wird.

US 2012/293 789 A1 offenbart mehrere Ansichten eines Objekts, die unter verschiedenen Winkeln um eine Achse des Objekts aufgenommen wurden. Hierzu wird ein mit einer Maske versehener Sensor verwendet, um bestimmte Winkel des Bildes aufzunehmen. Aufgenommen wird der Randbereich einer Schraube.

Aus EP 0 683 388 A1 geht Drehen und Aufnehmen eines spritzenförmigen Körpers hervor.

JP 2006 214890 A offenbart einen "article defect information detecting apparatus" zur Prüfung eines Zylinders unter Verwendung von zwei Zeilenkameras 2A und 2B. Der Zylinder wird gedreht. Eine Kreuzkorrelation wird durchgeführt, wobei "small regions" mit zwei Dimensionen erzeugt werden.

Der vorliegenden Erfindung liegt daher die Aufgabe zugrunde, eine möglichst präzise Überprüfung eines Messobjekts zu erzielen.

Erfindungsgemäß wird diese Aufgabe durch ein Verfahren zur optischen Überprüfung eines Messobjekts gelöst, umfassend Drehen des Messobjekts um eine Drehachse und gleichzeitig wiederholtes Abtasten des Messobjekts durch einen optischen Sensor, der eine Anzahl Bildzeilen aufweist, wobei das Abtasten ein Erfassen von wenigstens zwei voneinander beabstandeten Messzeilen auf dem Messobjekt in jeweilige Bildzeilen umfasst, wobei jeder Messzeile wenigstens eine Bildzeile zugeordnet ist und als Zeilenbild erfasst wird, und jede Bildzeile das Messobjekt an einer dieser Bildzeile zugeordneten Messzeile unter einem unterschiedlichen Winkel bezüglich einer Oberfläche des Messobjekts erfasst; Zusammenfügen aller Zeilenbilder, die einer Messzeile zugeordnet sind, zu einem jeweiligen zusammengesetzten Bild; Durchführen einer Merkmalsanalyse mittels Vergleichen der zusammengesetzten Bilder; und Klassifizieren von Fehlern, wobei Fehler von einem ersten Fehlertyp lediglich in einem der zusammensetzten Bilder erscheinen, und Fehler von einem weiteren Fehlertyp in mehreren oder einem anderen der zusammengesetzten Bilder erscheinen.

Vorteilhafterweise weist das Messobjekt einen kreisförmigen Querschnitt auf.

Gemäß einer weiteren Ausführungsform ist die Drehachse eine Längsachse des Messobjekts. Insbesondere kann der kreisförmige Querschnitt des Messobjekts der Länge des Messobjekts nach variieren.

Gemäß einer weiteren Ausführungsform besteht das Messobjekt aus Glas.

Besonders vorteilhaft ist eine Ausführungsform, bei der das Messobjekt ein Spritzenkörper einer Spritze, insbesondere einer Glasspritze ist.

Gemäß einer weiteren Ausführungsform ist der optische Sensor Bestandteil einer Kamera.

Bevorzugt ist ferner eine Ausführungsform, bei der die Bildzeilen in dem optischen Sensor in einer Ebene angeordnet sind.

Das Verfahren kann ferner umfassen:
Bestimmen eines ersten Winkels zwischen einer ersten Ebene, die eine Längsachse einer ersten Bildzeile und eine Längsachse einer Messzeile enthält, und der Oberfläche des Sensors;
Bestimmen eines zweiten Winkels zwischen einer zweiten Ebene, die eine Längsachse einer zweiten von der ersten Bildzeile beabstandeten Bildzeile und eine Längsachse der Messzeile enthält, und der Oberfläche des Sensors;
Bestimmen des Abstands zwischen der ersten und der zweiten Bildzeile und
Bestimmen der Entfernung der Messzeile von dem Sensor.

Insbesondere kann auf Basis der Entfernungen von Messzeilen zwischen Rissen und oberflächlichen Kratzern unterschieden werden.

Bevorzugt wird ferner eine Ausführungsform, bei der vor Beginn des Abtastens jeweils wenigstens eine Bildzeile, die jeder Messzeile zugeordnet ist, aus den Bildzeilen des optischen Sensors ausgewählt wird.

Ferner ist vorteilhaft, dass die Messzeilen aus parallelen Blickrichtungen erfasst werden, beispielsweise mit einem telezentrischen Objektiv.

Alternativ werden die Messzeilen zentralperspektivisch erfasst, beispielsweise mit einem entozentrischen Objektiv.

Vorteilhaft ist ferner, dass vor Beginn des Abtastens wenigstens eine Bildzeile des optischen Sensors ausgelesen und anhand der Bildzeile die Ausrichtung des Messobjekts bezüglich des optischen Sensors bestimmt wird.

Insbesondere wird vor Beginn des Abtastens der gesamte Sensor ausgelesen.

Vorteilhafterweise wird die Kamera so ausgerichtet, dass das Messobjekt in einem bestimmten Winkel zur Horizontalen erfasst wird, beispielsweise exakt waagerecht.

Ferner ist es besonders vorteilhaft, die Information zum Ausrichten des Messobjekts oder zum Kompensieren der Ausrichtung des Messobjekts zu verwenden, falls das Messobjekt nicht parallel zu dem optischen Sensor liegt.

Gemäß einer weiteren Ausführungsform sind die Bildzeilen parallel zur Drehachse angeordnet.

Gemäß weiteren Ausführungsformen können die Dimensionen des zusammengesetzten Bildes der Richtung der Drehachse sowie dem in eine Ebene projizierten Umfang des Messobjekts entsprechen. Ferner müssen die Bildzeilen in dem optischen Sensor nicht exakt parallel zur Drehachse liegen, sondern können von dieser Konstellation geringfügig abweichen, beispielsweise um einen Toleranzbereich von 5 Grad. Darüber hinaus kann die Erfindung ihre Vorteile auch mit anderen Winkeln zwischen Drehachse und Bildzeilen entfalten, solange ein Winkel von 45 Grad nicht erreicht oder überschritten wird.

Die mit Bildzeilen aufgenommenen Zeilenbilder enthalten Bilddaten, die von einer Messzeile aufgenommen wurden. Im Gegensatz dazu können die Bildzeilen Zeilen von Aufnahmeelementen innerhalb des optischen Sensors sein.

Die oben genannten Schritte des Drehens und Erfassens können so aufeinander abgestimmt sein, dass die entstehenden Zeilenbilder sich nahtlos aneinanderfügen lassen, ohne dass Überlappungen aufeinanderfolgender Zeilenbilder oder aber Abstände zwischen aufeinanderfolgenden Zeilenbildern entstehen. Es liegt im Belieben des Fachmanns, Drehen und Erfassen in Schritten durchzuführen, wobei jedem Schritt ein Drehen des Messobjekts um einen vorbestimmten Winkel entspricht, und wobei dieser Winkel so gewählt wird, dass nahtlos kombinierbare Zeilenbilder erfasst werden.

Die Erfindung liefert mehrere zusammengesetzte Bilder, die jeweils Informationen über die Messobjektoberfläche unter einem einzigen Winkel bezüglich dieser Oberfläche sowie in einer einzigen Entfernung zur Kamera enthalten. Auf diese Weise werden Ungenauigkeiten, die auf unterschiedlichen Winkeln und/oder Entfernungen beruhen, auf vorteilhafte Weise vermieden. Der Erfindung liegt die überraschende Erkenntnis zugrunde, dass durch ein oder mehrere in Parallelperspektive aufgenommene Bildzeilen bei gleichzeitigem Drehen des Messobjekts eine hohe Informationsdichte je Bild erzielt wird. Insbesondere enthalten die Bilder gemeinsame Informationen, die sich aus den Unterschieden zwischen den Bildern ergeben. Die resultierenden Bilder stellen eine leistungsfähige Datengrundlage für weitere Analysen dar. Das Verfahren kann ferner mit einfachen Mitteln implementiert werden.

Weitere Merkmale und Vorteile der Erfindung ergeben sich aus den Ansprüchen und aus der nachfolgenden Beschreibung, in der Ausführungsbeispiele anhand der schematischen Zeichnungen im Einzelnen erläutert sind, in denen:
- Figur 1: eine Seitenansicht eines Messobjekts zur Überprüfung durch das erfindungsgemäße Verfahren zeigt,
- Figur 2: eine Seitenansicht einer Vorrichtung zur Durchführung des erfindungsgemäßen Verfahrens zeigt,
- Figur 3: eine perspektivische Ansicht einer Vorrichtung zum Durchführen des erfindungsgemäßen Verfahrens zeigt, und
- Figur 4: mehrere zusammengesetzte Bilder zeigt, die mit einer beispielhaften Ausführungsform des erfindungsgemäßen Verfahrens erzeugt wurden, und
- Figur 5: eine Querschnittsansicht einer Vorrichtung zum Durchführen des erfindungsgemäßen Verfahrens zeigt.

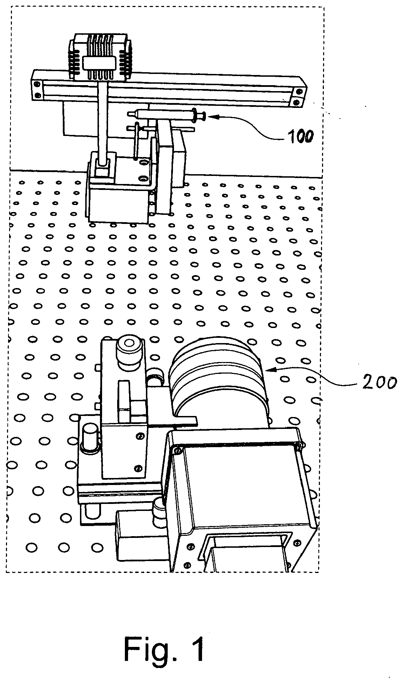

In Figur 1 ist beispielhaft ein Messobjekt 100 in Längsrichtung gezeigt, das auf Fehler überprüft werden soll.

Das Messobjekt 100 weist vorzugsweise einen kreisförmigen Querschnitt auf, der in Längsrichtung des Messobjekts 100 variieren kann. Beispielsweise kann das Messobjekt 100 eine Flaschenform aufweisen. Das hier gezeigte Messobjekt 100 stellt einen Spritzenkörper einer Glasspritze dar, jedoch eignet sich das erfindungsgemäße Verfahren zur Überprüfung beliebiger Messobjekte mit kreisförmigem Querschnitt. Alternativ kann das Verfahren auch für Körper mit anderem Querschnitt herangezogen werden.

Die zu erkennenden Fehler können oberflächlich sein und beispielsweise Kratzer oder Narben sein. Ist das Messobjekt 100 transparent oder wenigstens teilweise transparent, so können mit dem erfindungsgemäßen Verfahren auch Fehler detektiert werden, die sich von der Oberfläche in das Messobjekt 100 hinein erstrecken, beispielsweise Risse, oder sogar vollständig im Messobjekt 100 enthalten sind. Die Erfindung unterscheidet zwischen bestimmten Fehlertypen, bspw. oberflächliche und tiefergehende Fehler.

Figur 1 zeigt das Messobjekt 100 aus einer möglichen Blickrichtung einer Kamera 200. Beispielhaft sind Messzeilen a, b und c eingezeichnet, die von der Kamera 200 aufgenommen werden sollen. Die Anzahl der gezeigten Messzeilen stellt lediglich ein Beispiel dar; die Vorteile der Erfindung können mit beliebiger Anzahl von Messzeilen erzielt werden. Alle Messzeilen liegen im Wesentlichen parallel zu einer Drehachse, beispielsweise einer Längsachse, des Messobjekts 100. Die Blickebene der Kamera 200 auf die Messzeile b steht senkrecht auf der Oberfläche des Messobjekts 100, während die Blickebenen auf die Messzeilen a und c mit der Oberfläche des Messobjekts 100 aufgrund dessen Krümmung beziehungsweise aufgrund dessen kreisförmigen Querschnitts einen stumpfen oder spitzen Winkel bilden. Beispielsweise können die Messzeilen a und c unter einer Winkelabweichung bezüglich des senkrechten Winkels von plus oder minus bis zu 30 Grad, bevorzugt bis zu zehn Grad erfasst werden. Anzahl und Abstände der Messzeilen können variieren. Vorzugsweise werden jedoch wenigstens zwei Messzeilen verwendet.

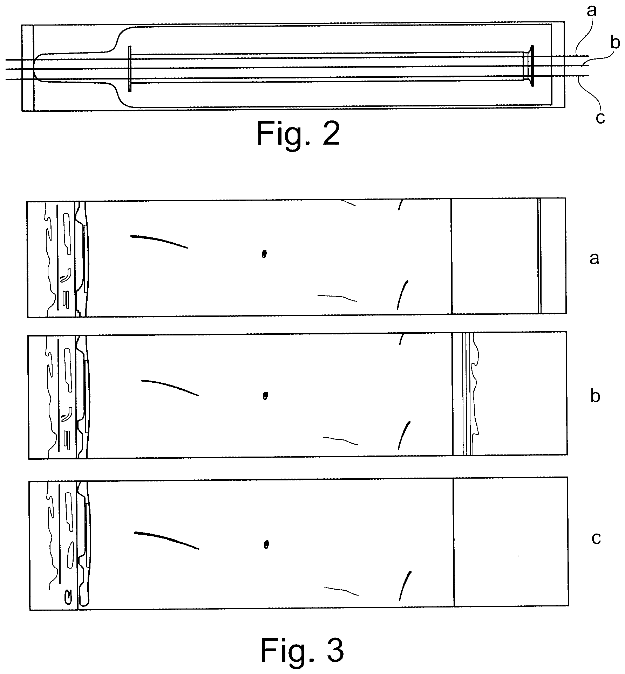

In Figur 2 ist eine Seitenansicht einer beispielhaften Vorrichtung zur Durchführung des erfindungsgemäßen Verfahrens gezeigt. Als Ergänzung zu der schematischen Darstellung der Figur 2 zeigt Figur 3 eine perspektivische Ansicht der beispielhaften Vorrichtung. Das Messobjekt 100 ist im Querschnitt mit der Längsachse als Mittelpunkt gezeigt. In der gezeigten Ausführungsform werden Signale der Messzeilen a, b und c über eine oder mehrere Linsen (Objektiv) in einer Kamera 200 und dort durch einen Sensor 220 empfangen. Alternativ können mehrere Sensoren verwendet werden, die lediglich jeweils Signale der Messzeilen a, b und c aufnehmen und so die Aufnahme einer Parallelperspektive ermöglichen. Eine im Wesentlichen parallele Perspektive ist jedoch auch mit dem gezeigten Aufbau und einem einzigen Flächensensor möglich, indem beispielsweise Bereiche des Sensors 220 den Signalen der Messzeilen a, b und c zugeordnet werden. Jedoch entfaltet die Erfindung ihre Vorteile auch bei Verwendung einer Kamera mit zentralperspektivischer Bilderfassung.

Das Messobjekt 100 kann kontinuierlich um seine Längsachse gedreht werden. Alternativ kann die Drehung auch um eine andere Achse erfolgen. Dabei werden optische Signale des Messobjekts 100 durch den oder die Sensoren 220 aufgenommen. Die Aufnahmen werden kontinuierlich wiederholt, um möglichst alle Oberflächenbereiche des Messobjekts 100 zu erfassen. Mit jeder Aufnahme werden sämtliche Objektpunkte entlang der vordefinierten Messzeilen in entsprechenden Bildzeilen erfasst, im vorliegenden Beispiel sämtliche Objektpunkte entlang der Messzeilen a, b und c auf der Oberfläche des Messobjekts 100. Aus den Bildzeilen werden zusammengesetzte Bilder erzeugt. Vorzugsweise wird für jede Messzeile ein Bild erzeugt, das sich aus den Bildzeilen dieser Messzeile zusammensetzt. Jedes der Bilder enthält entlang einer ersten, beispielsweise horizontalen, Bildachse Oberflächenpunkte des Messobjekts 100 entlang derjenigen Messzeile, der das Bild entspricht. Entlang einer zweiten Bildachse sind alle Bildzeilen enthalten, die im Verlauf der Drehung des Messobjekts 100 aufgenommen wurden. Wird eine vollständige Drehung des Messobjekts 100 bei gleichzeitiger regelmäßiger Erfassung der Messzeilen vorgenommen, so entspricht die Länge der zweiten Bildachse dem Umfang des Messobjekts 100. Die zusammengesetzten Bilder zeigen somit alle die gleiche Oberfläche des Messobjekts 100, jedoch unter verschiedenen Blickwinkeln bezüglich der Objektoberfläche. Drehen und Aufnehmen können aufeinander abgestimmt sein, indem das Messobjekt 100 jeweils um einen vorbestimmten Winkel gedreht und eine Aufnahme gemacht wird. Der Vorgang kann wiederholt werden, bis eine vollständige Drehung vollzogen wurde, oder kann lediglich einen bestimmten Winkelbereich umfassen.

Gemäß einer Ausführungsform wird in einer Kamera 200 als Sensor ein einzelner Flächensensor 220 verwendet, der eine Vielzahl von lichtempfindlichen Elementen enthält. Die lichtempfindlichen Elemente können beispielsweise in einer Matrix angeordnet sein. Zeilen der Matrix entsprechen Bildzeilen. Bestimmte Zeilen der Matrix können so ausgewählt werden, dass sie die Signale einer jeweiligen Messzeile erfassen. Es ist in diesem Fall von Vorteil, die Abstände der Zeilen so auszuwählen, dass sie möglichst parallele Blickrichtungen auf die Messzeile erlauben. Die bereits oben erläuterten zusammengesetzten Bilder werden dann lediglich aus den vorbestimmten Bildzeilen zusammengefügt. Nicht ausgewählte Bildzeilen brauchen gar nicht weiter verarbeitet zu werden, so dass das erfindungsgemäße Verfahren besonders schnell arbeitet.

Eine beispielhafte Auflösung eines Sensors umfasst 4092x3072 Bildpunkte (Pixel). Bei konventionellem Auslesen fallen dann kontinuierlich ca. 12 Megapixel je Aufnahme an. Bei Verwendung der vorliegenden Erfindung reduziert sich diese Datenmenge auf beispielsweise 3x4092 Pixel (bei drei Bildzeilen). Dies entspricht lediglich etwa 0,1 % der gesamten Bildinformationen des Sensors. Diese Information wird dann mehrfach synchron zu der Rotation ausgelesen, um ein Bild zu erzeugen.

In den Figuren 2 und 3 ist ferner ein Beleuchtungskörper gezeigt. Der Beleuchtungskörper kann aus der Blickrichtung der Kamera 200 hinter dem Messobjekt 100 liegen. Alternativ kann der Beleuchtungskörper zwischen Kamera 200 und Messobjekt 100 oder auch an anderer Stelle angeordnet sein, um weitere Beleuchtungseffekte auszunutzen.

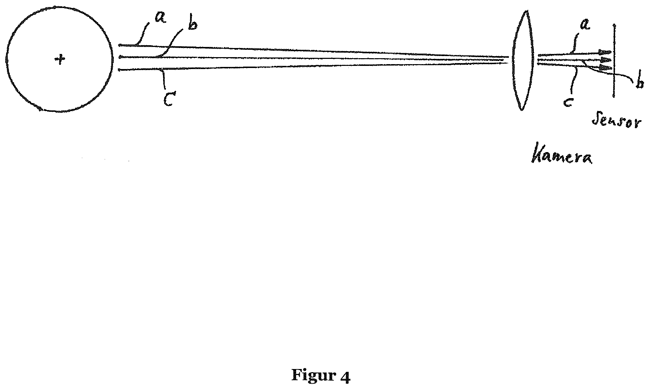

Figur 4 zeigt Beispiele von Aufnahmen, die bei Zugrundelegen von drei Messbeziehungsweise Bildzeilen erzeugt wurden. Jede der drei Aufnahmen zeigt die gleiche Objektfläche des gleichen Messobjekts 100. Jedoch wurden alle Bildzeilen eines jeweiligen Bildes unter dem gleichen Winkel bezüglich der Objektoberfläche aufgenommen. In jedem der drei Bilder sind in der Mitte und rechts Kratzer zu erkennen, die somit unabhängig vom Winkel sichtbar ist. In der linken Hälfte der Bilder ist ein Riss zu erkennen, der jedoch je nach Winkel anders erscheint.

Die durch das erfindungsgemäße Verfahren erzeugten zusammengesetzten Bilder eignen sich für eine weitergehende Analyse. Da die gleichen Oberflächendaten unter verschiedenen Winkeln erscheinen, ansonsten jedoch keine signifikanten Unterschiede auftreten - beispielsweise unterschiedliche Tiefen oder unterschiedliche Verzerrungen aufgrund einer reinen Zentralperspektive - können Bildmerkmale durch Vergleichen der Bilder erkannt und klassifiziert werden. Hierzu eignen sich einschlägige Verfahren, wie beispielsweise Bilden von Differenzbildern, Identifizieren von Maxima und Minima, Vergleichen von Maxima und Minima in den unterschiedlichen Bildern. Ein Vergleich der zusammengesetzten Bilder dient dazu, Fehler zu klassifizieren. Bei bestimmten Materialien des Messobjekts 100 erscheinen tiefergehende Fehler, wie etwa Risse, je nach Winkel anders als oberflächliche Fehler, wie etwa Kratzer oder Narben. Erscheint ein bestimmter Fehlertyp nur unter einem bestimmten Winkel und ein weiterer Fehlertyp unter mehreren Winkeln oder einem anderen Winkel, so liefert eine Vergleichsanalyse der Bilder Aufschluss über den jeweils vorliegenden Fehler. Unter Triangulation versteht man ein Verfahren zum Bestimmen einer Entfernung eines entfernten Punktes anhand der Lage von zwei bekannten Punkten und den Winkeln zwischen jeweils einer Geraden durch einen der bekannten Punkte und den entfernten Punkt mit einer Geraden durch beide bekannten Punkte. Beispielsweise kann die Entfernung von einer Basislänge b zwischen zwei bekannten Punkten s₁ und s₂ zu einem entfernten Punkt anhand von zwei Winkeln α und β zwischen Geraden durch s₁ und s₂ und einer jeweiligen Geraden durch s₁ und den entfernten Punkt bzw. durch s₂ und den entfernten Punkt bestimmt werden.

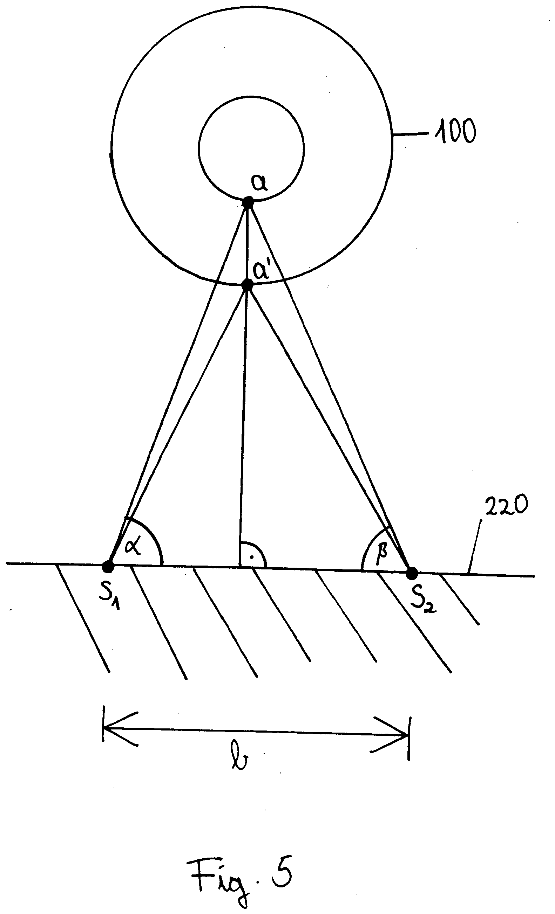

Figur 5 zeigt eine Querschnittsansicht eines sich senkrecht zur Abbildungsebene erstreckenden optischen Sensors 220 und eines Messobjekts 100. Messzeilen a und a' sind im Querschnitt als Punkte gezeigt. Auch sind zwei Bildzeilen s₁ und s₂ auf dem Sensor 220 im Querschnitt als Punkte gezeigt. Der Winkel α liegt zwischen einer Ebene durch die Längsachsen von s₁ und a sowie der Oberfläche des Sensors 220. Winkel β liegt zwischen einer Ebene durch die Längsachsen von s₂ und a sowie der Oberfläche des Sensors 220. Alternativ können die Winkel anhand einer Normalen des Sensors 220 anstelle der Oberfläche des Sensors 220 bestimmt werden. Ferner wird die Basislänge b als Abstand zwischen s₁ und s₂ herangezogen, um die Entfernung von a oder einem Punkt aus a zu bestimmen. Analog kann verfahren werden, um die Entfernung von a' oder einem Punkt aus a' zu bestimmen.

Auf diese Weise ist es bei einem transparenten Messobjekt 100 insbesondere möglich, die Entfernung von Unregelmäßigkeiten wie beispielsweise Rissen zu bestimmen, die unter der Oberfläche des Messobjekts 100 liegen und somit weiter von dem optischen Sensor 220 entfernt sind als die Oberfläche des Messobjekts 100. Auf diese Weise kann beispielsweise die Tiefe eines Risses im Messobjekt 100 bestimmt werden oder zumindest ein in die Tiefe des Messobjekts gehender Riss von einem oberflächlichen Kratzer unterschieden werden. Im gezeigten Beispiel kann der Abstand zwischen a und a' ermittelt werden, um die Tiefe eines Risses zu bestimmen, der dort verläuft.

Eine weitere Ausführungsform der Erfindung betrifft die Ausrichtung des Messobjekts bezüglich des optischen Sensors. So kann vor Beginn des Abtastens von Messzeilen wenigstens eine Bildzeile des optischen Sensors 220 ausgelesen werden und die ausgelesene Information dazu verwendet werden, die Ausrichtung des Messobjekts 100 bezüglich des Sensors 220 zu bestimmen. Besonders vorteilhaft ist es, wenn zu diesem Zweck mehrere Bildzeilen oder sogar der gesamte optische Sensor 220 ausgelesen wird. Die ausgelesene Information kann ferner dazu verwendet werden, das Messobjekt parallel zum optischen Sensor auszurichten, falls eine Abweichung von einer solchen Ausrichtung erkannt wird. Alternativ oder zusätzlich kann die Information verwendet werden, um eine Ausrichtung des Messobjekts zu kompensieren, falls das Messobjekt nicht parallel zu dem optischen Sensor liegt.

Das vorstehend beschriebene und mit den beigefügten Ansprüchen beanspruchte Verfahren stellt somit einen leistungsfähigen und effizienten Weg dar, insbesondere transparente Oberflächen von Messobjekten zu analysieren.

### Bezugszeichen

- 100: Messobjekt
- 200: Kamera
- 220: Sensor
- a, b, c: Messzeilen

## Patentansprüche

1. Verfahren zur optischen Überprüfung eines Messobjekts (100), umfassend:
Drehen des Messobjekts (100) um eine Drehachse (110) und gleichzeitig wiederholtes Abtasten des Messobjekts (100) durch einen optischen Sensor (220), der eine Anzahl Bildzeilen aufweist, wobei das Abtasten ein Erfassen von wenigstens zwei voneinander beabstandeten Messzeilen auf dem Messobjekt (100) in jeweilige Bildzeilen umfasst, wobei jeder Messzeile wenigstens eine Bildzeile zugeordnet ist und als Zeilenbild erfasst wird, und jede Bildzeile das Messobjekt an einer dieser Bildzeile zugeordneten Messzeile unter einem unterschiedlichen Winkel bezüglich einer Oberfläche des Messobjekts erfasst;
Zusammenfügen aller Zeilenbilder, die einer Messzeile zugeordnet sind, zu einem jeweiligen zusammengesetzten Bild;
Durchführen einer Merkmalsanalyse mittels Vergleichen der zusammengesetzten Bilder; und
Klassifizieren von Fehlern, wobei Fehler von einem ersten Fehlertyp lediglich in einem der zusammengesetzten Bilder erscheinen, und Fehler von einem weiteren Fehlertyp in mehreren oder einem anderen der zusammengesetzten Bilder erscheinen.

2. Verfahren nach Anspruch 1, **dadurch gekennzeichnet, dass** das Messobjekt (100) einen kreisförmigen Querschnitt aufweist.

3. Verfahren nach einem der vorstehenden Ansprüche, **dadurch gekennzeichnet, dass** die Drehachse (110) eine Längsachse des Messobjekts ist.

4. Verfahren nach Anspruch 2, **dadurch gekennzeichnet, dass** der kreisförmige Querschnitt des Messobjekts (100) der Länge des Messobjekts nach variiert.

5. Verfahren nach einem der vorstehenden Ansprüche, **dadurch gekennzeichnet, dass** das Messobjekt (100) ein Spritzenkörper einer Spritze, insbesondere einer Glasspritze ist.

6. Verfahren nach einem der vorstehenden Ansprüche, **dadurch gekennzeichnet, dass** die Bildzeilen in dem optischen Sensor (220) in einer Ebene angeordnet sind.

7. Verfahren nach Anspruch 6, **dadurch gekennzeichnet, dass** vor Beginn des Abtastens jeweils wenigstens eine Bildzeile, die jeder Messzeile zugeordnet ist, aus den Bildzeilen des optischen Sensors (220) ausgewählt wird.

8. Verfahren nach einem der vorstehenden Ansprüche, **dadurch gekennzeichnet, dass** die Messzeilen aus parallelen Blickrichtungen erfasst werden.

9. Verfahren nach einem der vorstehenden Ansprüche 1 bis 6, **dadurch gekennzeichnet, dass** die Messzeilen zentralperspektivisch erfasst werden.

10. Verfahren nach einem der vorstehenden Ansprüche, **dadurch gekennzeichnet, dass** vor Beginn des Abtastens wenigstens eine Bildzeile des optischen Sensors (220) ausgelesen und anhand der Bildzeile die Ausrichtung des Messobjekts bezüglich des Sensors (220) bestimmt wird.

11. Verfahren nach Anspruch 10, **dadurch gekennzeichnet, dass** die ausgelesene Information zum Ausrichten des Messobjekts oder zum Kompensieren der Ausrichtung des Messobjekts verwendet wird, falls das Messobjekt nicht parallel zu dem optischen Sensor liegt.

12. Verfahren nach einem der vorstehenden Ansprüche, **dadurch gekennzeichnet, dass** die Bildzeilen parallel zur Drehachse (110) angeordnet sind.

## Claims

1. Method for the optical examination of an object under examination (100), comprising:
Rotating of the object under examination (100) about an axis of rotation (110) and scanning of the object under examination (100) by an optical sensor (220), repeated at the same time, which has a number of scan lines, wherein scanning comprises detecting at least two examination lines spaced apart from each other on the object under examination (100) in respective scan lines, at least one scan line being associated with each examination line and being detected as line image, and each scan line detecting the object under examination on an examination line associated with this scan line at a different angle in relation to a surface of the object under examination;
Joining up of all line images, which are associated with an examination line, to a respective composed image;
Execution of a feature analysis by comparing the composed images; and
Classification of errors, wherein errors of a first type of error only appear in one of the composed images, and errors of a further type of error appear in several or one other of the composed images.

2. Method according to claim 1, **characterized in that** the object under examination (100) has a circular cross section.

3. Method according to one of the above claims, **characterized in that** the axis of rotation (110) is a longitudinal axis of the object under examination.

4. Method according to claim 2, **characterized in that** the circular cross section of the object under examination (100) varies in accordance with the length of the object under examination.

5. Method according to one of the above claims, **characterized in that** the object under examination (100) is a barrel of a syringe, in particular a glass syringe.

6. Method according to one of the above claims, **characterized in that** the scan lines are arranged in the optical sensor (220) in a plane.

7. Method according to claim 6, **characterized in that** before beginning of the scanning in each case at least one scan line, which is associated with each examination line, is selected from the scan lines of the optical sensor (220).

8. Method according to one of the above claims, **characterized in that** the examination lines are detected from parallel lines of sight.

9. Method according to one of the above claims 1 to 6, **characterized in that** the examination lines are detected from a central perspective.

10. Method according to one of the above claims, **characterized in that** before beginning of the scanning at least one scan line of the optical sensor (220) is selected and the alignment of the object under examination in relation to the sensor (220) is determined on the basis of the scan line.

11. Method according to claim 10, **characterized in that** the selected information is used for aligning the object under examination or for compensating the alignment of the object under examination, if the object under examination does not lie parallel with the optical sensor.

12. Method according to one of the above claims, **characterized in that** the scan lines are arranged parallel with the axis of rotation (110).

## Revendications

1. Procédé d'examen optique d'un objet examiné (100), et ce procédé se compose des éléments suivants :
Rotation de l'objet examiné (100) autour d'un axe de rotation (110) et balayage de l'objet examiné (100) en faisant appel à un détecteur (220), avec répétition simultanée et utilisation d'un certain nombre de lignes de balayage, et ce balayage prévoit la détection d'au moins deux lignes d'examen écartées l'une de l'autre sur l'objet examiné (100) dans des lignes respectives de balayage, et au moins une ligne de balayage est associée à chaque ligne d'examen et est détectée en tant qu'image de ligne, et chaque ligne de balayage qui détecte l'objet examiné sur une ligne d'examen est associée à cette ligne de balayage sous un angle différent par rapport à une surface de l'objet examiné
Raccordement de toutes les images de ligne qui sont associée à une ligne d'examen à l'image composée respective
Exécution d'une analyse de fonction en comparant les images composées et
Classification des erreurs, et les erreurs d'un premier type n'apparaissent que dans l'une des images composées, alors que les erreurs d'un autre type apparaissent dans plusieurs images composées ou dans une autre des images composées.

2. Le procédé que décrit la revendication 1 et qui se **caractérise par le fait que** l'objet examiné (100) a une coupe circulaire.

3. Le procédé que décrit l'une ou l'autre des revendications précédentes et qui se **caractérise par le fait que** l'axe de rotation (110) est un axe longitudinal de l'objet examiné.

4. Le procédé que décrit la revendication 2 et qui se **caractérise par le fait que** la coupe circulaire de l'objet examiné (100) varie en fonction de la longueur de l'objet examiné.

5. Le procédé que décrit l'une ou l'autre des revendications précédentes et qui se **caractérise par le fait que** l'objet examiné (100) est le corps cylindrique d'une seringue, en particulier une seringue en verre.

6. Le procédé que décrit l'une ou l'autre des revendications précédentes et qui se **caractérise par le fait que** les lignes de balayage sont implantées dans le détecteur optique (220) d'un plan.

7. Le procédé que décrit la revendication 6 et qui se **caractérise par le fait que**, avant le début du balayage, dans chaque cas, au moins une ligne de balayage, qui est associée à chaque ligne d'examen, est sélectionnée à partir des lignes de balayage du détecteur optique (220).

8. Le procédé que décrit l'une ou l'autre des revendications précédentes et qui se **caractérise par le fait que** les lignes d'examen sont détectées à partir de lignes de visée parallèles.

9. Le procédé que décrit l'une ou l'autre des revendications 1 à 6 et qui se **caractérise par le fait que** les lignes d'examen sont détectées depuis une perspective centrale.

10. Le procédé que décrit l'une ou l'autre des revendications précédentes et qui se **caractérise par** le fait, avant le début du balayage, qu'au moins une ligne de balayage du détecteur optique (220) est sélectionnée et que l'alignement de l'objet examiné en liaison avec le détecteur (220) est déterminé sur la base de la ligne de balayage.

11. Le procédé que décrit la revendication 10 et qui se **caractérise par le fait que** les informations sélectionnées s'utilisent pour aligner l'objet examiné ou pour compenser l'alignement de l'objet examiné, lorsque l'objet examiné n'est pas parallèle au détecteur optique.

12. Le procédé que décrit l'une ou l'autre des revendications précédentes et qui se **caractérise par le fait que** les lignes de balayage sont disposées parallèlement à l'axe de rotation (110).
